# EUROPEAN PATENT APPLICATION

(11) **EP 1 814 101 A1**
(43) Date of publication of application: **01.08.2007**
(21) Application number: 04798245.9
(22) Date of filing: 19.11.2004
(51) Int. Cl.: G09G 5/00

(54) **PERSONAL DEVICE WITH IMAGE-ACQUISITION FUNCTIONS FOR THE APPLICATION OF AUGMENTED REALITY RESOURCES AND CORRESPONDING METHOD**

(71) Applicant: Daem Interactive, Sl, 08018 Barcelona (ES)
(72) Inventor: MONDINE NATUCCI, Ignacio, E-08012 Barcelona (ES)
(74) Representative: Gislon, Gabriele
(86) International application number: PCT/ES2004/000518
(87) International publication number: WO 2006/056622

(57) **Abstract**

The device comprises:
- a first image-acquisition unit;
- a display screen (2) able to display therein acquired images (3) acquired by said first unit;
- a connection with a second unit suitable for:
- processing said acquired images (3) for the identification of a pattern;
- calculating a positional reference vector, with respect to said first image-acquisition unit, of the identified pattern; and
- providing information, associated to said acquired image (3), that is able to generate a suitably dimensioned image (4), or set of images, taking into account said positional reference vector, suitable for being superimposed on said display screen (2) over said acquired image (3) or for substituting it.

The method comprises using a device as the proposed for the application of augmented reality resources.

## Description

### Field of the Art

The present invention relates to a personal device with image-acquisition functions for the application of augmented reality resources with a display screen for displaying said images, and to a method for the application of augmented reality resources.

### State of the Art

Technological development has led to surpassing the already well-known virtual reality with the innovative augmented reality, which combines the virtual world with the real world, offering the observer virtual information superimposed on real information.

Augmented reality provides great advantages, such as (unlike virtual reality) not isolating the user from his/her environment rather improving it or touching it up by means of adding virtual elements that do not exist in said environment.

There are a number of applications focused on a multitude of fields. These applications can be passive, i.e. they do not require user intervention, such as those which only show, for example in the field of architecture, three-dimensional images of what a house would be like when it is finished, mixing the current condition of the house, which is still being built, with elements, which are still virtual, that will comprise it when it is finished.

By way of example, a representative proposal of the mentioned passive applications of augmented reality is the one provided by patent application US2002/0188959, relating to a system and method allowing viewers of video/TV programs to automatically, or by request, receive synchronized supplemental multimedia information related to the video/TV programs.

There are also applications which could be considered active and which enable the user to interact with the elements that are shown. In these applications, for example in the field of computer science, most computer peripherals can be done away with, substituting them with virtual elements, such as keyboards, mice or buttons for activating different functions, involving a series of movements by the user, depending on the functions he/she wishes to activate and which are recognized by the system by means of suitable detectors (for example of relative position).

An example of such applications is the proposal provided in patent application US20040113885, relating to an augmented reality system using an input device so that a user can interact with the system. The proposed system comprises a display device for displaying the augmented image to the user, a video-based tracking system for locating real-world objects, a processor for determining the position and orientation of the user's view based on the location of the real-world objects and for projecting the virtual objects onto the display device and an input device including a series of markers placed at predetermined locations in the real world, in a scene viewed by the user, and which are augmented to simulate physical buttons. These markers can be physically manipulated by the user by means of the placement, for example, of his/her fingers on one of the markers, this action being recognized by the tracking system and duly processed. Such input devices can substitute the most conventional peripherals, such as keyboards or mice.

Another type of applications make use of the existing wireless infrastructures combined with augmented reality to enable use thereof in mobile devices incorporating display means.

A representative example of such applications is the proposal provided in patent application US20020167536, relating to a system, method and portable electronic device comprising a viewing apparatus to enable viewing the augmented reality by means of superimposing a computer-generated scene on a real scene. Such viewing apparatus is able to adopt two positions, in one of which it is possible to view a real scene with a superimposed virtual scene. This is preferably obtained by means of a display and a semitransparent mirror pivotally mounted with respect to the display screen. Through the mirror (as a result of the semitransparency thereof) a user can see the real world and, depending on the user's position, it is possible for the virtual image displayed on the display screen to be reflected in it and therefore superimposed in the mirror on the real image.

### Explanation of the Invention

It is necessary to provide an alternative to the state of the art which represents an evolutionary step with regard thereto, especially regarding the last prior art document discussed, without the need to use display means as specific as the viewing apparatus proposed in such document, rather a simple display screen, or to limit it to portable devices, rather aimed at any type of personal device.

The foregoing objectives and others are attained according to the present invention by providing a personal device with image-acquisition functions for the application of augmented reality resources, comprising in a first aspect:
- a first image-acquisition unit;
- a display screen able to display therein at least images acquired by said first unit;
- a connection with a second unit suitable for:
   - processing one or more of said acquired images for the identification of at least one pattern;
   - calculating a positional reference vector, with respect to said first image-acquisition unit, of the identified pattern; and
   - providing information associated to said acquired image that is able to generate a suitably dimensioned image or set of images, taking into account said positional reference vector, suitable for being superimposed on said display screen over said acquired image or for substituting it.

The mentioned pattern to be identified is representative of a graphic element, generally part or all of a view of an entity or object.

Different arrangements for said device are possible, depending on the embodiment, the most basic of which is that said second unit is included in the device itself or forms an assembly with said first unit.

For another one of said arrangements, the second unit is at a remote point and the device further includes a telecommunication unit suitable for communicating at least with said second unit.

For another embodiment with yet another type of arrangement, the components integrating said second unit are distributed between a remote point and the device itself, and said device further includes a telecommunication unit to communicate at least with the components located at said remote point.

The mentioned telecommunication unit is suitable for transmitting the acquired images to the second unit or to a part thereof, depending on the embodiment.

The second unit is also suitable for carrying out said processing of each of the acquired images received and for returning to the device at least:
- one positional reference vector for each identified pattern;

And furthermore, preferably:
- an image with an associated mask for each returned positional reference vector, or:

- a mask for each returned positional reference vector so as to allow the generation of said suitably dimensioned image or set of images.

When the second unit or some of its components are located in the device, these components are suitable for generating said suitably dimensioned image or set of images according to said positional reference vector or said mask returned to the device.

To that end, at least one of the components of said second unit located in said device have a series of images stored therein, and these components are suitable for generating said suitably dimensioned image, or set of images, by means of their selection from said series of stored images or for manipulating said stored images for generating said suitably dimensioned image or set of images. In other words, once the device receives a positional reference vector or a mask from a series of components of the second unit, in relation to an image which has previously been sent from the first unit, another series of components of the second unit either select an image they have stored therein associated to said vector or mask and they suitably dimension it to finally superimpose it on the display screen over the acquired image, thus producing the augmented reality effect, or they manage to produce said effect by means of the generation of a new image from those which are stored therein (or from a series of stored data that are not images) by means of, for example, running a specific algorithm and substituting the acquired image with said new image generated on the display screen of the device.

The proposed device is suitable for superimposing said returned or generated image over one of said acquired images, or for substituting it, depending on the embodiment, on said display screen.

The previously mentioned telecommunication unit is suitable for transmitting said acquired images to said second unit in color, only in black and white, whole images or part of said images.

The proposed device can be both a device solely designed for the application of augmented reality resources or to further carry out other different functions. In the latter case, the display screen the device has is also suitable for displaying at least information relating to applications belonging to the personal device, and such screen can be a touch display screen allowing a user to interact and use said applications belonging to the personal device. Such is the case, for example, of a mobile telephone with a built-in camera, which in addition to the functions thereof (telephony, multimedia applications, etc.) uses the camera and the display screen it has for the application of augmented reality resources, as has been previously described.

In a second aspect, the present invention relates to a personal device with image-acquisition functions for the application of augmented reality resources, comprising:
- a first image-acquisition unit;
- a display screen able to display therein at least images acquired by said first unit;
- a connection with a second unit suitable for:
   - processing one or more of said acquired images for the identification of at least one pattern; and
   - providing information associated to said acquired image that is able to generate a suitably dimensioned image or set of images suitable for being superimposed on said display screen over said acquired image or for substituting it.

For one embodiment, said suitably dimensioned image is representative of a flat or perspective text message.

In a third aspect, the present invention relates to a personal device with image-acquisition functions for the application of augmented reality resources, comprising:
- a first image-acquisition unit;
- a display screen able to display therein said images;
- a second unit suitable for:
   - processing one or more of said acquired images for the identification of at least one pattern;
   and
- a telecommunication unit for transmitting said acquired image or part of it.

Said second unit is preferably suitable for also:
- calculating a positional reference vector, with respect to said image-acquisition unit, of the identified pattern;
and said telecommunication unit is adapted to also transmit said positional reference vector to said remote point.

The second unit is adapted to receive and treat information associated to said acquired image coming from said remote point to generate a suitably dimensioned image or set of images, taking into account said positional reference vector, suitable for being superimposed on said display screen over said acquired image or for substituting it.

In a fourth aspect, the present invention also relates to a method for the application of augmented reality resources comprising, by means of a personal device with image-acquisition functions, the following steps:
- acquiring at least one image by means of a first unit,
- displaying said at least one acquired image on a display screen of said device,
- sending said acquired image to a second unit,
- in said second unit, at least:
   - processing one or more of said acquired images for the identification of at least one pattern,
   - calculating a positional reference vector, with respect to said first image-acquisition unit, of the identified pattern,
   - providing information associated to said acquired image that is able to generate a suitably dimensioned image or set of images, taking into account said positional reference vector, suitable for being superimposed on said display screen over said acquired image or for substituting it, and
- displaying on said display screen said suitably dimensioned image or set of images, superimposed over the acquired image or substituting it.

It further comprises carrying out all the steps for a set of images, both acquired images and generated images, on the basis of said provided information.

Said set of images generally forms a video sequence.

The method also comprises carrying out said acquisition from different angles.

By means of its application it is possible, for example and from among a great number of combinations, to acquire and send a fixed image and to receive a three-dimensional image that can be viewed on the display screen of the device, superimposed over or substituting said fixed image with the possibility of viewing it from different angles.

### Brief Description of the Drawings

The aforementioned and other features and advantages of the invention will become clearer from the following description of a series of embodiments, some of which are illustrated in the attached drawings and which must be considered to be illustrative and non-limiting.

In said drawings:
Figure 1a shows the proposed device for one embodiment at the time when it is acquiring a real world image,
Figure 1b shows for the same embodiment of Figure 2a the proposed device, on the display screen of which said acquired image plus a superimposed virtual image received in relation to the acquired image can be seen,
Figure 2a shows a magazine with articles represented therein intended to be acquired or captured by the personal device proposed by the present invention for another embodiment,
Figure 2b shows part of the proposed personal device, on the display screen of which an image of one of the articles represented in the magazine of Figure 1a, captured by the camera of the device, can be seen, and a three-dimensional virtual image representing a perspective of the same article has been superimposed over said image,
Figure 3a shows yet another embodiment, where the proposed device can be seen acquiring a real world image at the time it receives, in real time, a virtual image, and displays both superimposed images on its display screen,
Figure 3b shows the images, with augmented reality characteristics, displayed on the display screen of the proposed device, for the same embodiment of Figure 3a from a specific angle, and
Figure 3c shows the same images of Figure 3b, with augmented reality characteristics, displayed on the display screen of the proposed device, for the same embodiment of Figure 3a, but from a different angle.

### Detailed Description of some Embodiments

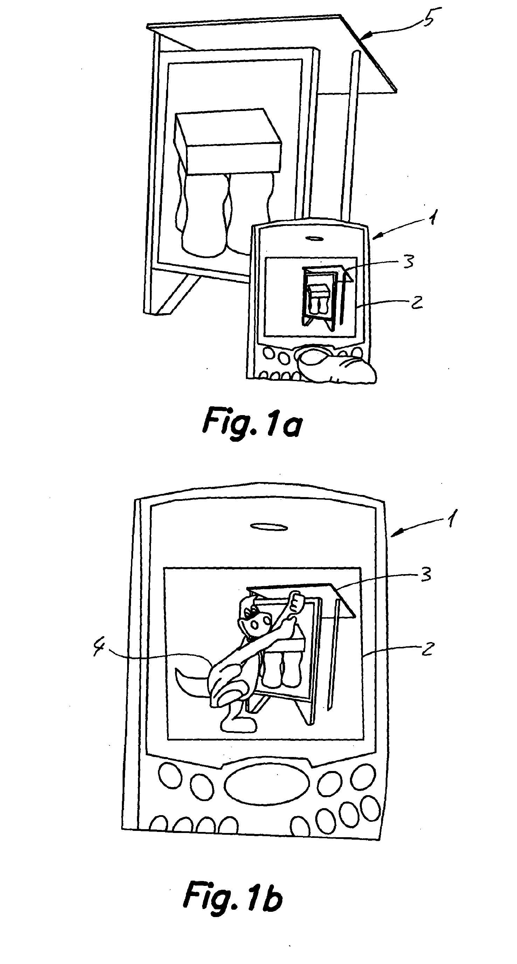

As shown in the figures, in a first aspect the present invention relates to a personal device 1 with image-acquisition functions for the application of augmented reality resources. Said personal device 1 is a mobile telephone 1 for the illustrated embodiments (see Figures 1b, 2b and 3a), incorporating a camera (not shown), although it could be another type of personal device having the mentioned features that a person skilled in the art could think of, such as an electronic agenda or laptop computer.

The device 1 comprises:
- a first image-acquisition unit, such as the mentioned camera (not shown);
- a display screen 2 able to display therein at least acquired images 3 acquired by said first unit;
- a connection with a second unit suitable for:
   - processing one or more of said acquired images 3 for the identification of at least one pattern;
   - calculating a positional reference vector, with respect to said first image-acquisition unit, of the identified pattern; and
   - providing information associated to said acquired image 3 that is able to generate a suitably dimensioned image 4 or set of images, taking into account said positional reference vector, suitable for being superimposed on said display screen 2 over said acquired image 3 or for substituting it.

Depending on the embodiment, the second unit is included in the device 1 itself or it forms an assembly with said first unit at a remote point (not shown), or part is in the device 1 and part is at a remote point. For these last two cases, said device 1 further includes a telecommunication unit suitable for communicating at least with the components located in said remote point.

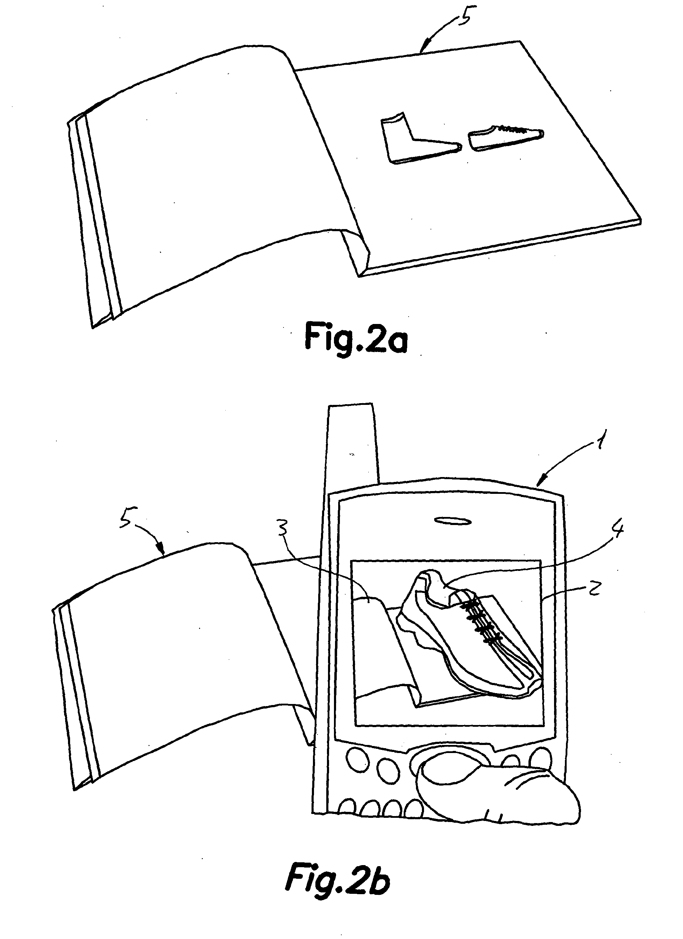

Said pattern is generally representative of a graphic element, preferably part or all of a view of an entity or object 5, such as a bus stop with an advertising poster of Figure 1a, which is captured by the camera of the mobile telephone 1 illustrated in the same figure and displayed on its display screen 2, or the magazine of Figure 2a, part of which has been captured and displayed on the display screen 2 of the mobile telephone 1 of Figure 2b.

In the shown embodiments (see Figures 1b, 2b, 3a, 3b and 3c), the generated and suitably dimensioned image 4 is completely virtual and has been superimposed on said display screen 2 over the real image 3 captured by the camera.

The previously mentioned case is the preferred case, although there are other embodiments (not shown) in which the generated image 4 substitutes the acquired image 3, and therefore the generated image 4 is the only one shown on the display screen 2. For these cases, the information able to generate the suitably dimensioned image 4 comprises data for generating a virtual image and a real image, the superimposition or combination of both forming the dimensioned image 4 which is finally displayed on the display screen 2.

For the embodiment shown in Figures 1a and 1b, the first unit of the device 1 has captured the image 3 of an advertisement for a product by focusing on an advertising poster 5, the second unit has identified a pattern referring to said image 3, has calculated the mentioned positional reference vector of the pattern with respect to the first image-acquisition unit and has generated (or has made it possible to generate) an image 4 associated to the acquired image 3 which in the figures is a virtual character who, for example, communicates a prize associated to said advertising poster 5. The generated image 5 would be different for other advertisement posters 5 not associated to a prize.

The result can be seen in Figure 1b, showing the mobile telephone 1 on the display screen 2 of which the advertising poster 3 plus the aforementioned virtual character 5 associated thereto can be seen.

For the embodiment shown in Figures 2a and 2b, another application of a new advertising concept in which interaction is possible, or dynamic advertising, is shown. In this case, the acquired image 3 is the advertisement for a product, specifically a sport shoe, in a magazine 5, and the generated image 4 is a perspective or three-dimensional representation of said sport shoe. It is possible to observe said image or three-dimensional representation 4 from different angles, for example when the magazine 5 is moved.

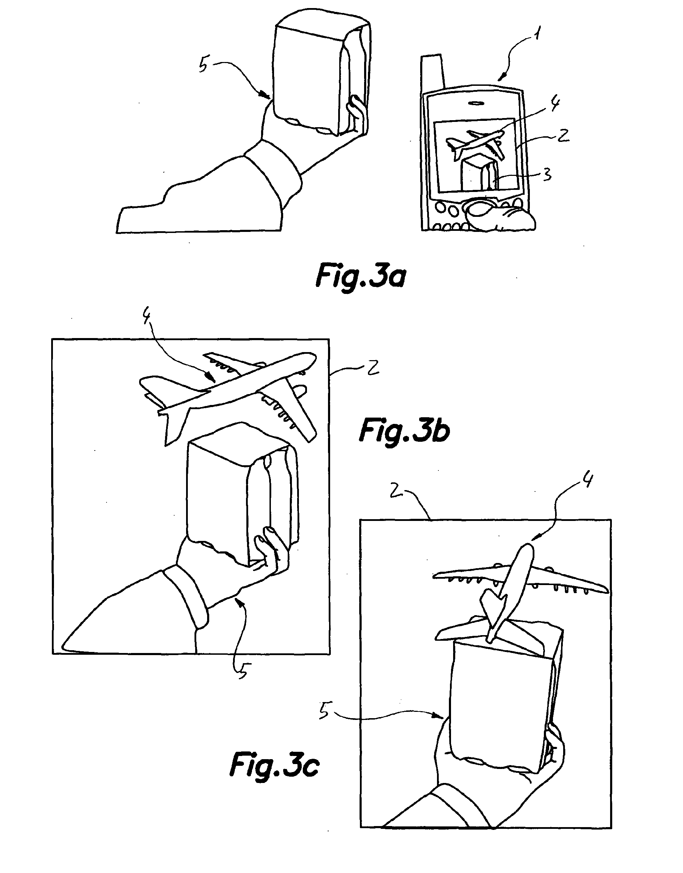

Figures 3a, 3b and 3c show yet another embodiment based on the same concept of the embodiment shown in Figures 1a and 1b but more advanced and in which third generation UMTS (Universal Mobile Telecommunications System) technology enables working in real time, i.e. the sending of the suitably dimensioned generated image 4 for superimposing it over (or substituting) the acquired image 3 on the display screen 2 is virtually instantaneous. Another advantage of the use of such technology (or of another similar technology if the personal device 1 is not a mobile telephone) is that it enables a large amount of data to circulate due to its greater bandwidth, making it possible for the acquired images 3 as well as the generated images 4 to be more complex than those of the most basic embodiment of Figures 1a and 1b. Figure 3a shows the moment in which a user captures by means of the camera of a mobile telephone 1 the mentioned product 5, but unlike the most basic embodiment mentioned in which it captured a fixed photograph of the representation of the product in an advertising poster, here it captures a photograph of the real word, being able to photograph it from different angles or even acquire a set of images or a video sequence. One or more images 4 (or video sequence) associated to the acquired image or images 3 (or video sequence) is or are generated, sent and shown in real time on the display screen 2 superimposed over (or substituting) the acquired image or images. Said images can also be different perspectives or views from different angles of a virtual object 4 (in this case an airplane), each of which is associated to a respective view from a certain angle of the acquired image 3. As a result of the calculation of the positional reference vector, which is explained above, the angle from which the product 5 is captured by means of the camera of the mobile telephone can vary, observing on the display screen 2 how the view of the virtual image 4 also varies at the same time the acquired image 3 does. Figures 3b and 3c show the display screen 2 of a mobile telephone reflecting such situation from two different angles.

The generation of the suitably dimensioned images 4 can be done in different ways, from a simple selection of a series of images stored in the second unit, to the manipulation of said stored images to create a new one, and to the generation of a new image 4 starting solely from the acquired image 3 or part of it.

The personal device 1 can be both a device for applying only augmented reality resources, and also and preferably a device for which the application of said augmented reality resources is only one of its functions. This is the case of the mobile telephones 1 shown. In this case, the display screen 2 is suitable for also showing information relating to applications belonging to the personal device 1 and can even be a touch display screen allowing a user to interact and use said applications belonging to the personal device 1, as occurs with electronic agendas.

In a second aspect, the present invention relates to a personal device 1 different from the one proposed by the first aspect of the invention in which the second unit is only suitable for:
- processing one or more of said acquired images 1 for the identification of at least one pattern; and
- providing information associated to said acquired image 3 that is able to generate a suitably dimensioned image 4 or set of images suitable for being superimposed on said display screen 2 over said acquired image 3 or for substituting it.

In other words, it is not necessary to calculate any positional reference vector to generate a dimensioned image with respect thereto, rather said generation and dimensioning is carried out simply based on the identified pattern. For an embodiment (not shown) of the second aspect of the invention, such suitably dimensioned image 4 is representative of a flat or perspective text message, which could be superimposed over a real acquired image 3 or could substitute it.

In a third aspect, the present invention relates to a personal device with image-acquisition functions for the application of augmented reality resources, comprising:
- a first image-acquisition unit;
- a display screen 2 able to display therein at least several acquired images 3 acquired by said first unit 1;
- a second unit suitable for:
   - processing one or more of said acquired images 3 for the identification of at least one pattern;
   and
- a telecommunication unit for transmitting said acquired image 3 or part of it to a remote point.

Said second unit is suitable for also:
- calculating a positional reference vector, with respect to said image-acquisition unit, of the identified pattern; and said telecommunication unit is adapted to also transmit said positional reference vector to said remote point.

The second unit is adapted to receive and treat information associated to said acquired image 3 coming from said remote point to generate a suitably dimensioned image 4 or set of images, taking into account said pattern or said pattern and said positional reference vector, suitable for being superimposed on said display screen 2 over said acquired image 3 or for substituting it.

In a fourth aspect, the present invention relates to a method for the application of augmented reality resources comprising, by means of a personal device with image-acquisition functions such as the one proposed by the first aspect of the present invention, the following steps:
- acquiring at least one image by means of a first unit,
- displaying said at least one acquired image 3 on a display screen 2 of said device 1,
- sending said acquired image 3 to a second unit,
- in said second unit, at least:
   - processing one or more of said acquired images 3 for the identification of at least one pattern,
   - calculating a positional reference vector, with respect to said first image-acquisition unit, of the identified pattern,
   - providing information associated to said acquired image 3 that is able to generate a suitably dimensioned image 4 or set of images, taking into account said positional reference vector, suitable for being superimposed on said display screen 2 over said acquired image 3 or for substituting it, and
- displaying on said display screen 2 said suitably dimensioned image 4, superimposed over the acquired image 3 or substituting it.

The proposed method comprises carrying out all the steps for a set of images, both the acquired images 3 and generated images 4, on the basis of said provided information, said images of said set preferably being views from different angles of the images 3, 4, for which purpose said acquisition is carried out from different angles and said provided information comprises data for generating different views of said suitably dimensioned image 4, each of them from a respective angle.

For one embodiment, said set of images form a video sequence.

In a fifth aspect, the present invention relates to a method for the application of augmented reality resources, comprising, by means of a personal device with image-acquisition functions, the following steps:
- acquiring at least one image by means of a first unit,
- displaying said at least one acquired image 3 on a display screen 2 of said device 1,
- sending said acquired image 3 to a second unit,
- in said second unit, at least:
   - processing one or more of said acquired images 3 for the identification of at least one pattern,
   - providing information associated to said acquired image 3 that is able to generate a suitably dimensioned image 4 or set of images suitable for being superimposed on said display screen 2 over said acquired image 3 or for substituting it, and
- displaying on said display screen 2 said suitably dimensioned image 4 or set of images, superimposed over the acquired image 3 or substituting it.

For one embodiment, said suitably dimensioned image 4 is representative of a flat or perspective text message, which could be superimposed over a real acquired image 3 or could substitute it.

A person skilled in the art could introduce changes and modifications in the described embodiments without departing from the scope of the invention as it is defined in the following claims.

## Claims

1. A personal device with image-acquisition functions for the application of augmented reality resources, comprising:
- a first image-acquisition unit;
- at least one display screen (2) able to display therein at least acquired images (3) acquired by said first unit;
- a connection with a second unit suitable for:
- processing one or more of said acquired images (3) for the identification of at least one pattern;
- calculating a positional reference vector, with respect to said first image-acquisition unit, of the identified pattern; and
- providing information associated to said acquired image (3) that is able to generate a suitably dimensioned image (4), or set of images, taking into account said positional reference vector, suitable for being superimposed on said display screen (2) over said acquired image (3) or for substituting it.

2. A device according to claim 1, **characterized in that** said second unit is included in the device (1) itself or forms an assembly with said first unit.

3. A device according to claim 1, **characterized in that** said second unit is at a remote point, and **in that** said device (1) further includes a telecommunication unit suitable for communicating at least with said second unit.

4. A device according to claim 1, **characterized in that** the components integrating said second unit are distributed between a remote point and the device (1) itself, and said device (1) further includes a telecommunication unit to communicate at least with the components located at said remote point.

5. A device according to claim 1, **characterized in that** said pattern is representative of a graphic element.

6. A device according to claim 5, **characterized in that** said graphic element is part of a view of an entity (5).

7. A device according to claim 5, **characterized in that** said graphic element is all of a view of an entity (5).

8. A device according to claim 1, **characterized in that** when said information that is able to generate a suitably dimensioned image (4) or set of images is suitable for substituting said acquired image (3), it comprises data for generating a virtual image and a real image, the superimposition or combination of both forming said dimensioned image (4).

9. A device according to claim 1, **characterized in that** said information that is able to generate a suitably dimensioned image (4) or set of images comprises data for generating a three-dimensional or perspective image.

10. A device according to claims 3 or 4, **characterized in that** said telecommunication unit is suitable for transmitting the acquired images (3) to said second unit or to a part thereof.

11. A device according to claim 10, **characterized in that** said second unit is suitable for carrying out said processing of each of the acquired images (3) received and for returning to the device (1) at least:
- one positional reference vector for each identified pattern.

12. A device according to claim 11, **characterized in that** said second unit is suitable for returning to the device (1) further:
- an image (4) with an associated mask for each returned positional reference vector.

13. A device according to claim 11, **characterized in that** said second unit is suitable for returning to the device (1) further:
- a mask for each returned positional reference vector so as to allow the generation of said suitably dimensioned image (4) or set of images.

14. A device according to claim 11 or 13, **characterized in that** the components of said second unit located in said device (1) are suitable for generating said suitably dimensioned image (4) or set of images according to said positional reference vector or said mask returned to the device (1).

15. A device according to claim 14, **characterized in that** at least one of the components of said second unit located in said device (1) has a series of images stored therein, and said components are suitable for generating said suitably dimensioned image (4), or set of images, by means of their selection from said series of stored images.

16. A device according to claim 15, **characterized in that** the components of said second unit located in said device (1) are suitable for manipulating said stored images for generating said suitably dimensioned image (4) or set of images.

17. A device according to claim 12 or 14, **characterized in that** it is suitable for superimposing said returned or generated image (4) with one of said acquired images (3) on said display screen (2).

18. A device according to claim 12 or 13, **characterized in that** it is suitable for substituting one of said acquired images (3) by means of said returned or generated image (4) on said display screen (2).

19. A device according to claim 10, **characterized in that** said telecommunication unit is suitable for transmitting said acquired images (3) to said second unit, at least in part or only in black and white.

20. A device according to claim 10, **characterized in that** said telecommunication unit is suitable for transmitting said acquired images (3) to said second unit as whole or in part.

21. A device according to claim 1, **characterized in that** said display screen (2) is suitable for displaying at least information relating to applications belonging to the personal device (1).

22. A device according to claim 21, **characterized in that** said display screen (2) is a touch display screen allowing a user to interact and use said applications belonging to the personal device (1).

23. A personal device with image-acquisition functions for the application of augmented reality resources comprising:
- a first image-acquisition unit;
- at least one display screen (2) able to display therein at least acquired images (3) acquired by said first unit (1);
- a connection with a second unit suitable for:
- processing one or more of said acquired images (1) for the identification of at least one pattern; and
- providing information associated to said acquired image (3) that is able to generate a suitably dimensioned image (4), or set of images, suitable for being superimposed on said display screen (2) over said acquired image (3) or for substituting it.

24. A device according to claim 23, **characterized in that** said suitably dimensioned image (4) is representative of a flat or perspective text message.

25. A personal device with image-acquisition functions for the application of augmented reality resources comprising:
- a first image-acquisition unit;
- at least one display screen (2) able to display therein at least acquired images (3) acquired by said first unit (1);
- a second unit suitable for:
- processing one or more of said acquired images (3) for the identification of at least one pattern;
and
- a telecommunication unit for transmitting said acquired image (3) or part of it to a remote point.

26. A device according to claim 25, **characterized in that** said second unit is suitable for also:
- calculating a positional reference vector, with respect to said image-acquisition unit, of the identified pattern;
and said telecommunication unit is adapted to also transmit said positional reference vector to said remote point.

27. A device according to claim 26, **characterized in that** said second unit is adapted to receive and treat information associated to said acquired image (3), coming from said remote point, to generate a suitably dimensioned image (4), or set of images, taking into account said positional reference vector, suitable for being superimposed on said display screen (2) over said acquired image (3) or for substituting it.

28. A method for the application of augmented reality resources, comprising, by means of a personal device with image-acquisition functions, the following steps:
- acquiring at least one image by means of a first unit,
- displaying said at least one acquired image (3) on a display screen (2) of said device (1),
- sending said acquired image (3) to a second unit,
- in said second unit, at least:
- processing one or more of said acquired images (3) for the identification of at least one pattern,
- calculating a positional reference vector, with respect to said first image-acquisition unit, of the identified pattern,
- providing information associated to said acquired image (3) that is able to generate a suitably dimensioned image (4), or set of images, taking into account said positional reference vector, suitable for being superimposed on said display screen (2) over said acquired image (3) or for substituting it, and
- displaying on said display screen (2) said suitably dimensioned image (4), or set of images, superimposed over the acquired image (3) or substituting it.

29. A method according to claim 28, **characterized in that** it comprises carrying out all the steps for a set of images, both acquired images (3) and generated images (4), on the basis of said provided information.

30. A method according to claim 29, **characterized in that** said set of images form a video sequence.

31. A method according to claim 28, **characterized in that** it comprises carrying out said acquisition from different angles.

32. A method according to claim 28 or 29, **characterized in that** said provided information comprises data for generating different views of said image (4) or set of images, suitably dimensioned, each of them from a respective angle.

33. A method for the application of augmented reality resources, comprising, by means of a personal device with image-acquisition functions, the following steps:
- acquiring at least one image by means of a first unit,
- displaying said at least one acquired image (3) on a display screen (2) of said device (1),
- sending said acquired image (3) to a second unit,
- in said second unit, at least:
- processing one or more of said acquired images (3) for the identification of at least one pattern,
- providing information associated to said acquired image (3) that is able to generate a suitably dimensioned image (4), or set of images, suitable for being superimposed on said display screen (2) over said acquired image (3) or for substituting it, and
- displaying on said display screen (2) said suitably dimensioned image (4), or set of images, superimposed over the acquired image (3) or substituting it.

34. A device according to claim 33, **characterized in that** said suitably dimensioned image (4) is representative of a flat or perspective text message.
